(19) Europäisches Patentamt / European Patent Office / Office européen des brevets

(11) **EP 4 672 362 A1**

(12) **EUROPEAN PATENT APPLICATION**
published in accordance with Art. 153(4) EPC

(43) Date of publication:
**31.12.2025 Bulletin 2026/01**

(21) Application number: 23923195.4

(22) Date of filing: 08.03.2023

(51) International Patent Classification (IPC):
*H01M 4/36* (2006.01)     *H01M 4/38* (2006.01)
*H01M 4/62* (2006.01)     *B82Y 30/00* (2011.01)
*B82Y 40/00* (2011.01)

(52) Cooperative Patent Classification (CPC):
**C01B 32/05; C01B 32/00; C01B 33/029;
H01M 4/134; H01M 4/1395; H01M 4/386;**
C01P 2004/03; C01P 2006/11; C01P 2006/12;
C01P 2006/40; H01M 10/0525; Y02E 60/10

(86) International application number:
**PCT/CN2023/080267**

(87) International publication number:
**WO 2024/174294 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  22.02.2023  CN 202310156300

(71) Applicants:
• **Shida Shingwa Advanced Material Group Co.,
Ltd.**
**Dongying, Shandong 257503 (CN)**
• **Shinghwa Advanced Material Technology
(Meishan)
Co., Ltd.
Meishan, Sichuan 620010 (CN)**
• **Shinghwa Advanced Material Technology
(Lianjiang)
Co., Ltd.
Fuzhou, Fujian 350512 (CN)**

(72) Inventors:
• **DING, Weitao**
**Shandong 257503 (CN)**
• **XING, Xianbo**
**Shandong 257503 (CN)**
• **LIU, Denghua**
**Shandong 257503 (CN)**
• **CHEN, Yingnan**
**Shandong 257503 (CN)**

(74) Representative: **Kurig, Thomas**
**Becker Kurig & Partner
Patentanwälte mbB
Bavariastraße 7
80336 München (DE)**

(54) **PREPARATION METHOD FOR SILICON-CARBON COMPOSITE MATERIAL AND SILICON-CARBON COMPOSITE MATERIAL**

(57)    The present invention discloses a preparation method of a silicon-carbon composite material and a silicon-carbon composite material. The preparation method includes: preparing a porous carbon-doped porous copper complex, and depositing nano-silicon on the porous carbon-doped porous copper complex according to a silane pyrolysis method, to obtain the silicon-carbon composite material. The preparation of the porous carbon-doped porous copper complex includes at least operation steps of: S11). uniformly mixing carbon disulfide, activated carbon, and a binder, and pressing an obtained mixture into copper foam to form a sheet-like structure; and S12). transferring the sheet-like structure obtained in the step S11) to a carbonization apparatus, and performing heating and carbonization in an inert atmosphere to obtain the porous carbon-doped porous copper complex. In the present invention, the following obvious defects and problems are significantly alleviated: The nano-silicon cannot be completely deposited in porous carbon when only pure porous carbon is used as a substrate for depositing the nano-silicon, thus affecting expansion and high-temperature preservation performance of the silicon-carbon composite material due to exposure of the nano-silicon; and the use of a pure porous metal for depositing the nano-silicon leads to poor consistency and low efficiency.

EP 4 672 362 A1

FIG. 1

**Description**

The present application claims priority to Chinese Patent Application No. 2023101563008, filed with the China National Intellectual Property Administration on February 22, 2023 and entitled "PREPARATION METHOD OF SILICON-CARBON COMPOSITE MATERIAL AND SILICON-CARBON COMPOSITE MATERIAL", which is incorporated herein by reference in its entirety.

## TECHNICAL FIELD

The present invention belongs to the field of preparation of lithium ion battery materials, and specifically, relates to a preparation method of a silicon-carbon composite material and a silicon-carbon composite material.

## BACKGROUND

A silicon-carbon material prepared according to a silane pyrolysis method is expected to be used in a lithium ion battery with high-energy density due to low expansion and good cycle performance of the silicon-carbon material. However, electronic conductivity of a porous carbon material is poor and a rate capability of the porous carbon material is affected because nano-silicon is deposited in the porous carbon material and porous carbon has a porous structure. Measures to improve the electronic conductivity of the porous carbon material mainly include improvement of density between materials, improvement of electronic conductivity of a material through metal element doping, or use of a porous metal as a substrate for nano-silicon deposition. Further, when the porous metal is used as the substrate for nano-silicon deposition, expansion is reduced based on a porous structure of the porous metal, and an impedance can be reduced and a rate capability can be improved based on a feature of high electronic conductivity of the metal material. However, use of the porous metal substrate for nano-silicon deposition instead of porous carbon is not conducive to nano-silicon deposition and results in problems such as poor nano-silicon deposition consistency and low nano-silicon deposition efficiency.

Therefore, the applicants hope to seek a technical solution to improve the above technical problems.

## SUMMARY OF INVENTION

In view of this, an objective of the present invention is to provide a preparation method of a silicon-carbon composite material and a silicon-carbon composite material, to significantly alleviate the following obvious defects and problems: Nano-silicon cannot be completely deposited in porous carbon when only pure porous carbon is used as a substrate for depositing the nano-silicon, thus affecting expansion and high-temperature preservation performance of the silicon-carbon composite material due to exposure of the nano-silicon; and the use of a pure porous metal for depositing the nano-silicon leads to poor consistency and low efficiency. Therefore, the silicon-carbon composite material is suitable for large-scale production and application.

Technical solutions of the present invention are as follows:

A preparation method of a silicon-carbon composite material is provided. The method includes: preparing a porous carbon-doped porous copper complex, and depositing nano-silicon on the porous carbon-doped porous copper complex according to a silane pyrolysis method, to obtain the silicon-carbon composite material.

Preferably, the preparation of the porous carbon-doped porous copper complex includes at least operation steps of:

S11). uniformly mixing carbon disulfide, activated carbon, and a binder, and pressing an obtained mixture into copper foam to form a sheet-like structure; and
S12). transferring the sheet-like structure obtained in the step S11) to a carbonization apparatus, and performing heating and carbonization in an inert atmosphere to obtain the porous carbon-doped porous copper complex.

Preferably, the binder in the step S11) is polyvinylidene fluoride.

Preferably, in the step S11), a mass ratio of the carbon disulfide to the activated carbon to the polyvinylidene fluoride to the copper foam is 0.2-5:5-50:0.1-10:100, more preferably, 0.5-2:10-30:1-5:100.

Preferably, in the step S11), a heat transfer coefficient of the copper foam: > 6 w/(m$^2$k); and/or mechanical strength of the copper foam $\geq$ 2.5 MPa; and/or tensile strength of the copper foam is 5-18 KPa; and/or a pore diameter range of the copper foam is 0.01-1 mm; and/or a porosity range of the copper foam is 60-95%.

Preferably, in the step S11), a pore diameter range of the activated carbon is 1-10 nm; and/or a specific surface area of the activated carbon is 500-2000 m$^2$/g; and/or mechanical strength of the activated carbon $\geq$ 0.5 MPa.

Preferably, in the step S12), heating and carbonization are performed at 200-400°C to obtain the porous carbon-doped porous copper complex.

Preferably, the silane pyrolysis method includes at least the following operation step:
transferring the porous carbon-doped porous copper complex to a vacuum chamber, and introducing a silane gas after the vacuum chamber is vacuumized, to obtain the silicon-carbon composite material.

Preferably, the silane gas is introduced after the vacuum chamber is vacuumized to ≤ 100 pa, a pressure is maintained at 1-2 MPa, heating is performed to reach 300-500°C, and introduction duration of the silane gas is not less than 1 hour, preferably, 1-6 hours.

Preferably, a silicon-carbon composite material is provided. The silicon-carbon composite material is prepared according to the preparation method described above.

A specific porous carbon-doped porous copper complex is prepared in the present application. After experimental verification, the applicants are surprised to find that the porous carbon-doped porous copper complex uses abundant porous structures of porous copper and has high mechanical strength, so that expansion of nano-silicon is restrained, electronic impedance of the nano-silicon is reduced, and cycle performance and a rate capability are improved. In addition, the porous carbon-doped porous copper complex gives play to a synergistic effect between the porous carbon and the porous copper, to achieve high frame strength, and uses a small pore diameter of the porous carbon and a large pore diameter of the porous copper, to give play to a synergistic effect between the pore diameters of the porous carbon and the porous copper, thereby improving nano-silicon deposition consistency and efficiency. Therefore, the following obvious defects and problems are significantly alleviated. The nano-silicon cannot be completely deposited in porous carbon when only pure porous carbon is used for depositing the nano-silicon, thus affecting expansion and high-temperature preservation performance of the silicon-carbon composite material due to exposure of the nano-silicon; and the use of a pure porous metal for depositing the nano-silicon leads to poor consistency and low efficiency. Therefore, the silicon-carbon composite material is suitable for large-scale production and application.

## DESCRIPTION OF DRAWINGS

FIG. 1 shows an SEM graph of a silicon-carbon composite material prepared in Embodiment 1 of the present invention; and
FIG. 2 is a block diagram of preparation steps of a porous carbon-doped porous copper complex according to a specific implementation of the present invention.

## DETAILED DESCRIPTION OF EMBODIMENTS

Embodiments of the present invention provide a preparation method of a silicon-carbon composite material. The method includes: preparing a porous carbon-doped porous copper complex, and depositing nano-silicon on the porous carbon-doped porous copper complex according to a silane pyrolysis method, to obtain the silicon-carbon composite material.

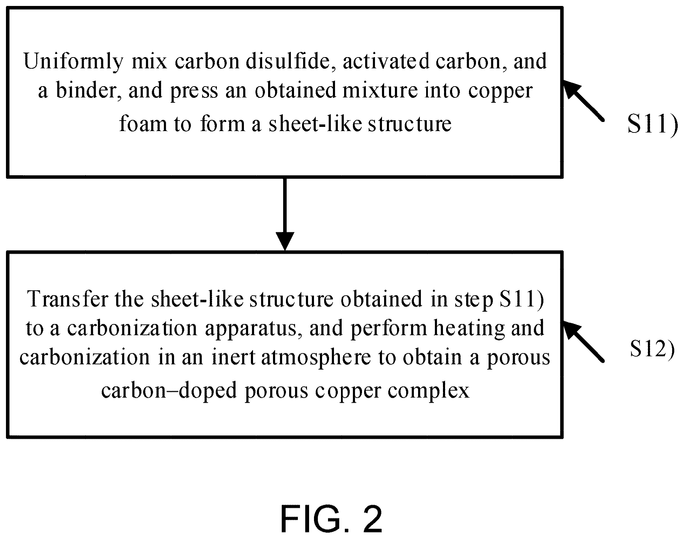

Preferably, in an implementation, as shown in FIG. 2, the preparation of the porous carbon-doped porous copper complex includes at least operation steps of:

S11). Uniformly mix carbon disulfide, activated carbon, and a binder, and press an obtained mixture into copper foam to form a sheet-like structure, where the binder is preferably polyvinylidene fluoride, and a mass ratio of the carbon disulfide to the activated carbon to the polyvinylidene fluoride to the copper foam is 0.2-5:5-50:0.1-10:100, more preferably, 0.5-2:10-30:1-5:100, and further more preferably, 0.5-1.5:15-25:1-5:100.

Preferably, to further enhance a synergistic effect between porous carbon and porous copper, in the step S11), a heat transfer coefficient of the copper foam: > 6 w/($m^2$k); and/or mechanical strength of the copper foam ≥ 2.5 MPa; and/or tensile strength of the copper foam is 5-18 KPa; and/or a pore diameter range of the copper foam is 0.01-1 mm; and/or a porosity range of the copper foam is 60-95%.

Preferably, to further enhance a synergistic effect between porous carbon and porous copper, in the step S11), a pore diameter range of the activated carbon is 1-10 nm; and/or a specific surface area of the activated carbon is 500-2000 $m^2$/g; and/or mechanical strength of the activated carbon ≥ 0.5 MPa.

S12). Transfer the sheet-like structure obtained in the step S11) to a carbonization apparatus, and perform heating and carbonization (carbonization is preferably performed at 200-400°C for 1-8 hours, more preferably, for 1-6 hours) in an inert atmosphere to obtain the porous carbon-doped porous copper complex. In this embodiment, amorphous carbon is deposited under a low temperature condition, to reduce a size of a silicon grain, thereby further reducing expansion and improving cycle performance.

Preferably, in an implementation, the silane pyrolysis method includes at least the following operation step:
transferring the porous carbon-doped porous copper complex to a vacuum chamber, introducing a silane gas after the vacuum chamber is vacuumized, to obtain the silicon-carbon composite material. Further preferably, the silane gas is introduced after the vacuum chamber is vacuumized to $\leq 100$ pa, a pressure is maintained at 1-2 MPa, and heating is performed to reach 300-500°C, where introduction duration of the silane gas is not less than 1 hour, preferably, 1-6 hours (it should be noted that the introduction duration is specifically introduction duration after an expected heating temperature is reached).

Preferably, embodiments of the present invention further provide a silicon-carbon composite material. The silicon-carbon composite material is prepared according to the preparation method described above.

To enable a person skilled in the art to better understand the technical solutions in the present invention, the technical solutions in the embodiments of the present invention are clearly and completely described below with reference to the accompanying drawings in the embodiments of the present invention. Obviously, the described embodiments are merely some rather than all of the embodiments of the present invention. All other embodiments obtained by a person of ordinary skill in the art based on the embodiments of the present invention without creative efforts shall fall within the protection scope of the present invention.

Based on the foregoing described implementations, the present application further provides the following specific embodiments:

**Embodiment 1:** The following operation steps are used:

> **Preparation of a porous carbon-doped porous copper complex:** uniformly mixing 1 g of carbon disulfide (as a sulfur source for doping), 20 g of activated carbon (with a pore diameter of 5 nm, a specific surface area of 1000 $m^2$/g, and mechanical strength of 1 MPa), and 3 g of polyvinylidene fluoride, and pressing an obtained mixture into 100 g of copper foam (with a heat transfer coefficient of 10 w/($m^2$k), mechanical strength of 10 MPa, tensile strength of 12 KPa, a pore diameter of 0.5 mm, and porosity of 80%) to form a sheet-like structure; and then transferring the sheet-like structure to a tube furnace (as a carbonization apparatus), and performing carbonization in an argon inert atmosphere under a heating condition of 300°C for 3 hours, to obtain the porous carbon-doped porous copper complex;

> **Preparation of a silicon-carbon composite material:** transferring the obtained porous carbon-doped porous copper complex to a vacuum chamber, introducing an $SiH_4$ silane gas (at an introduction flow rate of 10 ml/min) after the vacuum chamber is vacuumized to 50 pa, maintaining a pressure at 1.5 MPa, and performing heating to reach 400°C, to obtain the silicon-carbon composite material in Embodiment 1, where introduction duration of the $SiH_4$ silane gas is 3 hours.

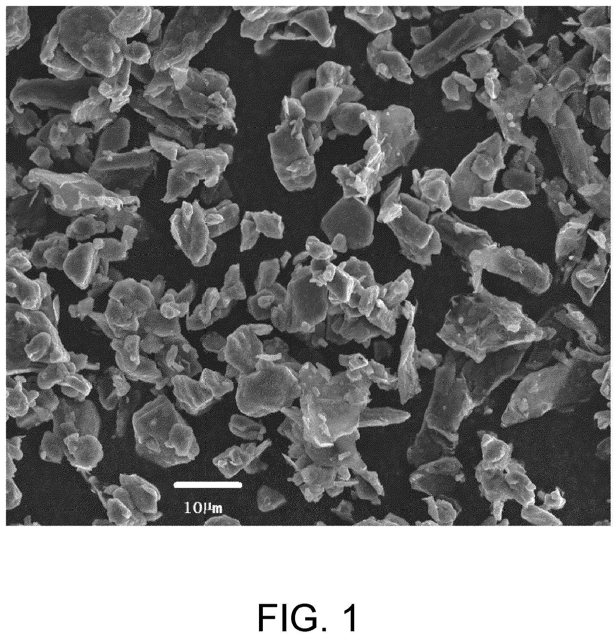

In the present application, an SEM (that is, scanning electron microscope) morphology test is performed on the silicon-carbon composite material obtained in Embodiment 1. A test result is shown in FIG. 1. It can be learned from FIG. 1 that the silicon-carbon composite material obtained in Embodiment 1 has a granular structure, granular size distribution of the material is uniform and reasonable, and a grain size is between 5-10 $\mu$m.

**Embodiment 2:** The following operation steps are used:

> **Preparation of a porous carbon-doped porous copper complex:** uniformly mixing 0.5 g of carbon disulfide (as a sulfur source for doping), 10 g of activated carbon (with a pore diameter of 1 nm, a specific surface area of 2000 $m^2$/g, and mechanical strength of 0.5 MPa), and 1 g of polyvinylidene fluoride, and pressing an obtained mixture into 100 g of copper foam (with a heat transfer coefficient of 12 w/($m^2$k), mechanical strength of 10 MPa, tensile strength of 5 KPa, a pore diameter of 0.01 mm, and porosity of 60%) to form a sheet-like structure; and then transferring the sheet-like structure to a tube furnace (as a carbonization apparatus), and performing carbonization in an argon inert atmosphere under a heating condition of 200°C for 6 hours, to obtain the porous carbon-doped porous copper complex;

> **Preparation of a silicon-carbon composite material:** transferring the obtained porous carbon-doped porous copper complex to a vacuum chamber, introducing an $SiH_4$ silane gas (at an introduction flow rate of 10 ml/min) after the vacuum chamber is vacuumized to 50 pa, maintaining a pressure at 1 MPa, and performing heating to reach 500°C, to obtain the silicon-carbon composite material in Embodiment 2, where introduction duration of the $SiH_4$ silane gas is 1 hour.

**Embodiment 3:** The following operation steps are used:

> **Preparation of a porous carbon-doped porous copper complex:** uniformly mixing 2 g of carbon disulfide (as a sulfur source for doping), 30 g of activated carbon (with a pore diameter of 10 nm, a specific surface area of 500 $m^2$/g, and mechanical strength of 2 MPa), and 5 g of polyvinylidene fluoride, and pressing an obtained mixture into 100 g of copper foam (with a heat transfer coefficient of 12 w/($m^2$k), mechanical strength of 10 MPa, tensile strength of 18 KPa, a pore diameter of 1 mm, and porosity of 95%) to form a sheet-like structure; and then transferring the sheet-like structure to a tube furnace (as a carbonization apparatus), and performing carbonization in an argon inert atmosphere under a heating condition of 400°C for 1 hour, to obtain the porous carbon-doped porous copper complex;

> **Preparation of a silicon-carbon composite material:** transferring the obtained porous carbon-doped porous copper complex to a vacuum chamber, introducing an $SiH_4$ silane gas (at an introduction flow rate of 10 ml/min) after the vacuum chamber is vacuumized to 50 pa, maintaining a pressure at 2 MPa, and performing heating to reach 300°C, to obtain the silicon-carbon composite material in Embodiment 3, where introduction duration of the $SiH_4$ silane gas is 6 hours.

**Comparative Example 1:** Remaining technical solutions of Comparative Example 1 are the same as those of Embodiment 1. A difference lies in that the step of preparing the porous carbon-doped porous copper complex is canceled in Comparative Example 1, but well-known porous carbon is directly used to replace the porous carbon-doped porous copper complex in Embodiment 1, to be transferred to the vacuum chamber, the $SiH_4$ silane gas is introduced (at an introduction flow rate of 10 ml/min) after the vacuum chamber is vacuumized to 50 pa, the pressure is maintained at 1.5 MPa, and heating is performed to reach 400°C, to obtain a silicon-carbon composite material in Comparative Example 1, where introduction duration of the $SiH_4$ silane gas is 3 hours.

**Comparative Example 2:** Remaining technical solutions of Comparative Example 2 are the same as those of Embodiment 1. A difference lies in that, in Comparative Example 2, the porous carbon-doped porous copper complex prepared in Embodiment 1 is transferred to the vacuum chamber, an argon gas is first introduced to drain air in a tube, then the $SiH_4$ silane gas is introduced (at a flow rate of 10 ml/min), the pressure is maintained at an atmospheric pressure, and heating is performed to reach 600°C, to obtain a silicon-carbon composite material in Comparative Example 2, where introduction duration of the $SiH_4$ silane gas is 3 hours.

**Comparative Example 3:** Remaining technical solutions of Comparative Example 3 are the same as those of Embodiment 1. A difference lies in that the step of preparing the porous carbon-doped porous copper complex is canceled in Comparative Example 3, but the copper foam in Embodiment 1 is directly used to replace the porous carbon-doped porous copper complex in Embodiment 1, to be transferred to the vacuum chamber, the $SiH_4$ silane gas is introduced (at an introduction flow rate of 10 ml/min) after the vacuum chamber is vacuumized to 50 pa, the pressure is maintained at 1.5 MPa, and heating is performed to reach 400°C, to obtain a silicon-carbon composite material in Comparative Example 3, where introduction duration of the $SiH_4$ silane gas is 3 hours.

**Comparative Example 4:** Remaining technical solutions of Comparative Example 4 are the same as those of Embodiment 1. A difference lies in that, in Comparative Example 4, the preparation of the porous carbon-doped porous copper complex includes the following operation step:

pressing 20 g of activated carbon (with a pore diameter of 5 nm, a specific surface area of 1000 $m^2/g$, and mechanical strength of 1 MPa)) into 100 g of copper foam (with a heat transfer coefficient of 10 $w/(m^2k)$, mechanical strength of 10 MPa, tensile strength of 12 KPa, a pore diameter of 0.5 mm, and porosity of 80%) to form a sheet-like structure; and then transferring the sheet-like structure to a tube furnace (as a carbonization apparatus), and performing carbonization in an argon inert atmosphere under a heating condition of 300°C for 3 hours, to obtain the porous carbon-doped porous copper complex.

To compare and verify effects of the foregoing embodiments and comparative examples, in the present application, physical and chemical tests are performed on the silicon-carbon composite materials obtained in Embodiments 1-3 and Comparative Examples 1-4:

(1) A specific surface area, tap density, and carbon content of each silicon-carbon composite material are tested according to the national standard GB/T 38823-2020 "Silicon-Carbon", conductivity of each silicon-carbon composite material is tested by using a four-probe tester, and a silicon grain of the material is tested through XRD. For test results, refer to Table 1.
(2) Button battery test:

The silicon-carbon composite materials corresponding to Embodiments 1-3 and Comparative Examples 1-4 each are used as a negative electrode material of a lithium ion battery to prepare a button battery according to the following method:

adding a binder, a conductive agent, and a solvent to each corresponding silicon-carbon composite material, performing stirring to prepare a slurry, coating the slurry on a copper foil, and drying and pressing the copper foil to obtain a negative electrode sheet, where the binder is LA132, the conductive agent is SP (conductive carbon black), the solvent is NMP, a dosage ratio of the silicon-carbon composite material to SP to LA132 to NMP is 95 g:1 g:4 g:220 mL, an electrolyte solution is a solution with $LiPF_6$ as an electrolyte and with a concentration of 1 mol/L, the solvent is a mixture of EC and DEC with a volume ratio of 1:1, a lithium metal sheet is a counter electrode, and a membrane is a polypropylene (PP) membrane.

Each button battery is assembled in a glovebox filled with an argon gas, and then an electrochemical performance test is performed. Specifically, the electrochemical performance test is performed by using a CT2001A battery tester of WUHAN LAND, a charging/discharging voltage range is 0.005 V to 2.0 V, and a charging/discharging rate is 0.1 C. For test results, refer to Table 1.

Full-charge expansion is further performed on the negative electrode sheet of the foregoing button battery. A specific test process is as follows: An electrode sheet test is performed on a rolled button battery to obtain a thickness D1 of the negative electrode sheet, a full-charge thickness D2 of the negative electrode sheet is analyzed when the button battery is fully charged to a 100% SOC, and an expansion rate is calculated (expansion rate = (D2-D1)/D1*100%). For test results, refer to Table 1.

**Table 1**

|  | Initial specific discharge capacity (mAh/g) | Initial efficiency (%) | Carbon content | Specific surface area (m2/g) | Tap density (g/cm$^3$) | Powder conductivity (S/cm) | Full-charge expansion | Silicon grain (nm) |
|---|---|---|---|---|---|---|---|---|
| Embodiment 1 | 1898.4 | 90.4 | 42.2% | 7.7 | 0.99 | 0.38 | 55.9% | 2.5 |
| Embodiment 2 | 1891.4 | 90.2 | 42.9% | 7.2 | 0.95 | 0.34 | 57.3% | 2.6 |
| Embodiment 3 | 1818.9 | 89.8 | 43.0% | 6.8 | 0.94 | 0.30 | 58.8% | 2.7 |
| Comparative Example 1 | 1664.4 | 86.3 | 56.1% | 4.4 | 0.83 | 0.15 | 87.0% | 4.1 |
| Comparative Example 2 | 1590.4 | 86.1 | 60.6% | 4.1 | 0.81 | 0.08 | 90.3% | 4.3 |
| Comparative Example 3 | 1543.4 | 89.2 | 75.3% | 4.3 | 0.78 | 0.02 | 93.8% | 4.4 |
| Comparative Example 4 | 1509.4 | 83.9 | 39.9% | 4.5 | 0.80 | 0.04 | 91.3% | 4.1 |

It can be learned from data in Table 1 that specific capacities and initial efficiencies of the silicon-carbon composite materials prepared in Embodiments 1-3 of the present application are obviously better than those of the silicon-carbon composite materials prepared in Comparative Examples 1-4. A reason may be that electronic conductivities and expansion of the materials are reduced based on advantages such as low expansion and a low impedance of porous copper, and impedances of the silicon-carbon composite materials prepared in Embodiments 1-3 are low, so that gram volume capacities of the materials can be further improved.

(3) Pouch battery performance test:

The silicon-carbon composite materials corresponding to Embodiments 1-3 and Comparative Examples 1-4 each are doped with 90% artificial graphite, an obtained product is used as a negative electrode material (that is, a negative electrode sheet), and the negative electrode material, a positive electrode ternary material ($LiNi_{1/3}Co_{1/3}Mn_{1/3}O_2$), an electrolyte solution, and a membrane are assembled into a 5 Ah pouch battery, where the membrane is celegard 2400, and the electrolyte solution is a $LiPF_6$ solution (a solvent is a mixed solution of EC and DEC with a volume ratio of 1:1, and a concentration of $LiPF_6$ is 1.3 mol/L).

The following performance tests are performed on each pouch battery:

a. Electrolyte solution adsorption capability test: drawing up V mL of electrolyte solution by using a 1 mL burette, adding a drop of electrolyte solution on a surface of each negative electrode sheet, performing timing until the electrolyte solution is completely absorbed, recording a time t, and calculating an electrolyte solution adsorption speed S=V/t of each negative electrode sheet. For test results, refer to Table 2.

b. Electrolyte solution retention rate test: calculating a theoretical electrolyte solution absorption amount m1 of a corresponding negative electrode sheet based on a parameter of each negative electrode sheet, weighing a weight m2 of the negative electrode sheet, then placing the negative electrode sheet in the electrolyte solution to soak for 24 hours, weighing a weight m3 of the negative electrode sheet, calculating an electrolyte solution absorption amount m3-m2 of the negative electrode sheet, and performing calculation according to the following formula:

$$\text{electrolyte solution retention rate} = (m3-m2)*100\%/m1.$$

For test results, refer to Table 2.

**Table 2**

|  | Electrolyte solution absorption speed (S) | Electrolyte solution retention rate |
|---|---|---|
| Embodiment 1 | 34 | 91.4% |
| Embodiment 2 | 41 | 90.1% |
| Embodiment 3 | 48 | 89.9% |
| Comparative Example 1 | 98 | 85.9% |
| Comparative Example 2 | 123 | 83.7% |
| Comparative Example 3 | 104 | 84.9% |
| Comparative Example 4 | 92 | 86.2% |

It can be learned from Table 2 that the electrolyte solution absorption and retention capabilities of the silicon-carbon composite materials provided in Embodiments 1-3 are obviously better than those of the silicon-carbon composite materials provided in Comparative Examples 1-4. A reason may be that the specific surface areas of the silicon-carbon composite materials provided in the present application are large, so that the electrolyte solution absorption and retention capabilities of the materials are improved.

c. Rate capability and cycle performance tests:

A cycle performance test and a rate capability test are performed on each prepared pouch battery. Test conditions of the cycle performance test are as follows: A charging/discharging voltage range is 2.5~4.2 V, a temperature is 25 ±3.0°C, a charging/discharging rate is 1.0 C/1.0 C, and a quantity of cycle times is 500. A test condition of the rate capability test is as follows: A constant-current ratio of each pouch battery is tested under a 2C condition. For test results, refer to Table 3.

**Table 3**

|  | Initial capacity retention rate (%) | Capacity retention rate (%) after 500 cycles | 2C constant-current ratio |
|---|---|---|---|
| Embodiment 1 | 100 | 92.3 | 88.5% |
| Embodiment 2 | 100 | 92.0 | 88.1% |
| Embodiment 3 | 100 | 91.3 | 87.4% |
| Comparative Example 1 | 100 | 87.7 | 84.9% |
| Comparative Example 2 | 100 | 86.7 | 82.3% |
| Comparative Example 3 | 100 | 84.1 | 79.9% |
| Comparative Example 4 | 100 | 87.3 | 81.2% |

It can be learned from Table 3 that the rate capabilities and the cycle performance of the pouch lithium ion batteries made of the silicon-carbon composite materials provided in Embodiments 1-3 are obviously better than those of the pouch lithium ion batteries made of the silicon-carbon composite materials provided in Comparative Examples 1-4. A main reason may be that the silicon-carbon composite materials provided in the present application have excellent electronic conductivity features, so that the rate capabilities are improved; and porous structures of the silicon-carbon composite materials enable the silicon-carbon composite materials to have high specific surface areas, thereby improving the electrolyte solution absorption and retention capabilities of the electrode sheets, and improving the cycle performance of the batteries to which the silicon-carbon composite materials are applied.

It will be clear to a person skilled in the art that the present invention is not limited to the details of the foregoing example embodiments, and the present invention can be implemented in other specific forms without departing from the spirit or essential features of the present invention. Therefore, the embodiments should be regarded in all respects as examples rather than as restrictive, and the scope of the present invention is defined by the appended claims rather than the foregoing descriptions. Therefore, all changes falling within the meanings and scope of equivalent elements of the claims are included in the present invention. Any reference numeral in the claims shall not be construed as limiting the claims.

In addition, it should be understood that, although this specification has been described with reference to implementations, not every implementation includes only one independent technical solution, and such description of this specification is by way of clarity only. A person skilled in the art should take this specification as a whole, and the technical solutions of the embodiments may be combined as appropriate to obtain other implementations that can be understood by a person skilled in the art.

**Claims**

1.  A preparation method of a silicon-carbon composite material, **characterized in that**, comprising: preparing a porous carbon-doped porous copper complex, and depositing nano-silicon on the porous carbon-doped porous copper complex according to a silane pyrolysis method, to obtain the silicon-carbon composite material.

2.  The preparation method of a silicon-carbon composite material according to claim 1, **characterized in that**, the preparation of the porous carbon-doped porous copper complex comprises at least operation steps of:

    S11). uniformly mixing carbon disulfide, activated carbon, and a binder, and pressing an obtained mixture into copper foam to form a sheet-like structure; and
    S12). transferring the sheet-like structure obtained in the step S11) to a carbonization apparatus, and performing heating and carbonization in an inert atmosphere to obtain the porous carbon-doped porous copper complex.

3.  The preparation method according to claim 2, **characterized in that**, the binder in the step S11) is polyvinylidene fluoride.

4.  The preparation method according to claim 2 or 3, **characterized in that**, in the step S11), a mass ratio of the carbon disulfide to the activated carbon to the polyvinylidene fluoride to the copper foam is 0.2-5:5-50:0.1-10:100, more preferably, 0.5-2:10-30:1-5:100.

5.  The preparation method according to claim 2, **characterized in that**, in the step S11), a heat transfer coefficient of the copper foam: > 6 w/(m$^2$k); and/or mechanical strength of the copper foam $\geq$ 2.5 MPa; and/or tensile strength of the copper foam is 5-18 KPa; and/or a pore diameter range of the copper foam is 0.01-1 mm; and/or a porosity range of the copper foam is 60-95%.

6.  The preparation method according to claim 2, **characterized in that**, in the step S11), a pore diameter range of the activated carbon is 1-10 nm; and/or a specific surface area of the activated carbon is 500-2000 m$^2$/g; and/or mechanical strength of the activated carbon $\geq$ 0.5 MPa.

7.  The preparation method according to claim 2, **characterized in that**, in the step S12), the heating and the carbonization are performed at 200-400°C to obtain the porous carbon-doped porous copper complex.

8.  The preparation method according to claim 1 or 2, **characterized in that**, the silane pyrolysis method comprises at least the following operation step:
    transferring the porous carbon-doped porous copper complex to a vacuum chamber, and introducing a silane gas after the vacuum chamber is vacuumized, to obtain the silicon-carbon composite material.

9.  The preparation method according to claim 8, **characterized in that**, the silane gas is introduced after the vacuum chamber is vacuumized to $\leq$ 100 pa, a pressure is maintained at 1-2 MPa, heating is performed to reach 300-500°C, and introduction duration of the silane gas is not less than 1 hour, preferably, 1-6 hours.

10. A silicon-carbon composite material, **characterized in that**, prepared according to the preparation method according to any one of claims 1 to 9.

FIG. 1

Uniformly mix carbon disulfide, activated carbon, and a binder, and press an obtained mixture into copper foam to form a sheet-like structure          S11)

Transfer the sheet-like structure obtained in step S11) to a carbonization apparatus, and perform heating and carbonization in an inert atmosphere to obtain a porous carbon-doped porous copper complex          S12)

FIG. 2

## INTERNATIONAL SEARCH REPORT

| | International application No. |
|---|---|
| | **PCT/CN2023/080267** |

**A. CLASSIFICATION OF SUBJECT MATTER**

H01M 4/36(2006.01)i; H01M 4/38(2006.01)i; H01M 4/62(2006.01)i; B82Y 30/00(2011.01)i; B82Y 40/00(2011.01)i

According to International Patent Classification (IPC) or to both national classification and IPC

**B. FIELDS SEARCHED**

Minimum documentation searched (classification system followed by classification symbols)

IPC:H01M 4/-,B82Y 30/-,B82Y 40/-

Documentation searched other than minimum documentation to the extent that such documents are included in the fields searched

Electronic data base consulted during the international search (name of data base and, where practicable, search terms used)

CNABS, CNTXT, ENTXTC, VEN, CNKI, WEB OF SCIENCE: 碳, 炭, C, 活性炭, 活性碳, 硅, 复合, 多孔, 泡沫, 金属, 铜, Cu, 硅烷, 沉积, carbon, activated carbon, silicon, composite, porous, foam, metal+, copper, silane, deposition

**C. DOCUMENTS CONSIDERED TO BE RELEVANT**

| Category* | Citation of document, with indication, where appropriate, of the relevant passages | Relevant to claim No. |
|---|---|---|
| Y | CN 114420998 A (DONGGUAN AMPEREX TECHNOLOGY LTD.) 29 April 2022 (2022-04-29) description, paragraphs [0013] and [0015] | 1-10 |
| Y | CN 109638224 A (XI'AN JIAOTONG-LIVERPOOL UNIVERSITY) 16 April 2019 (2019-04-16) description, paragraphs [0007]-[0020] | 1-10 |
| A | CN 115020689 A (LIYANG TIANMU PILOT BATTERY MATERIAL TECHNOLOGY CO., LTD.) 06 September 2022 (2022-09-06) entire document | 1-10 |
| A | CN 115676837 A (SHENGHUA NEW MATERIAL GROUP CO., LTD. et al.) 03 February 2023 (2023-02-03) entire document | 1-10 |
| A | WO 2022250109 A1 (SHOWA DENKO K. K.) 01 December 2022 (2022-12-01) entire document | 1-10 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 November 2023** | **10 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/080267**

| Patent document cited in search report | | | Publication date (day/month/year) | Patent family member(s) | Publication date (day/month/year) |
|---|---|---|---|---|---|
| CN | 114420998 | A | 29 April 2022 | None | |
| CN | 109638224 | A | 16 April 2019 | None | |
| CN | 115020689 | A | 06 September 2022 | None | |
| CN | 115676837 | A | 03 February 2023 | None | |
| WO | 2022250109 | A1 | 01 December 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023101563008
- GB T388232020 A